# EUROPÄISCHE PATENTSCHRIFT

(11) **EP 1 961 593 B1**
(45) Veröffentlichungstag und Bekanntmachung des Hinweises auf die Patenterteilung: **17.04.2013**
(21) Anmeldenummer: 07290242.2
(22) Anmeldetag: 23.02.2007
(51) Int. Cl.: B60H 1/00

(54) **Klimaanlage für ein Fahrzeug**
Air conditioning system for a vehicle
Climatisation pour véhicule

(43) Veröffentlichungstag der Anmeldung: 27.08.2008
(73) Patentinhaber: Behr GmbH & Co. KG, 70469 Stuttgart (DE); Behr France Rouffach SAS, 68250 Rouffach (FR); Behr America, Inc, Troy, Michigan 48083 (US)
(72) Erfinder: Feuerecker, Günther, 70567 Stuttgart (DE); Lochmahr, Karl, 71665 Vaihingen/Enz (DE); Müller, Frank, 75397 Simmozheim (DE); Neumeister, Dirk, 70374 Stuttgart (DE); Obradovich, Richard, 48154 Livonia (US); Schlinke, Gunnar, Troy, MI 48085 (US); Schmittheisler, Christophe, 67680 Epfig (FR); Strauss, Thomas, 73274 Notzingen (DE); Weinbrenner, Marcus, 70839 Gerlingen (DE)
(74) Vertreter: Grauel, Andreas

(56) Entgegenhaltungen:
- US-A1- 2004 050 086
- US-A1- 2004 089 003

## Beschreibung

Die Erfindung betrifft eine Klimaanlage für ein Fahrzeug gemäß dem Ober begriff des Anspruchs 1 und ein entsprechendes Verfahren zu deren Betrieb.

Um den Energieverbrauch von Fahrzeugen, insbesondere von Kraftfahrzeugen, zu senken und Energie zu sparen, werden in Klimaanlagen von Niederverbrauchsfahrzeugen Wärmepumpensysteme verwendet. Viele Wärmepumpen benutzen als Wärmequelle die Umgebungsluft. Da hier Umgebungswärme zum Heizen nutzbar gemacht wird, können solche Systeme einen vorteilhaften Energieverbrauch aufweisen.

Viele dieser Wärmepumpen nutzen den Verdampfer, der im Kühlbetrieb die Kabinen-Zuluft abkühlt, zusätzlich als Heizer, der im Heizbetrieb die Kabinen-Zuluft erwärmt. Dies hat jedoch den Nachteil, dass sich am Verdampfer/Heizer beim Kühlen und Entfeuchten Kondenswasser niederschlägt. Wird dieser feuchte Verdampfer zum Heizen verwendet, kommt es zum Beschlagen der Scheiben (Flash-Fogging), was aus Sicherheitsgründen unbedingt vermieden werden muss. Eine solche Konstellation bei der Heizen und Kühlen zeitlich nahe aufeinander folgen, kommt häufig in der klimatischen Übergangszeit im Frühjahr und Herbst vor. Zuverlässige Abhilfe ohne Einschränkungen schafft hier nur die Hinzunahme eines weiteren Wärmeübertragers im Zuluftstrom, der nur zum Heizen verwendet wird, während der Verdampfer ausschließlich zum Kühlen und Entfeuchten verwendet wird, wie es beispielsweise in der DE 39 07 201 beschrieben wird.

Aus der DE 102 25 055 A1 ist eine Klimaanlage für ein Kraftfahrzeug bekannt, mit einem Kältemittelkreislauf mit mehreren Wärmeübertragern durch die ein Kältemittel leitbar ist, und einem Kühlmittelkreislauf, wobei ein Wärmeübertrager dem Wärmeaustausch zwischen Kältemittel und Kühlmittel dient. lm Heizbetrieb sind hierbei zwei Heizer vorgesehen, einer ist Teil des Kältemittelkreislaufs, der andere ist Teil des Kühlmittelkreislaufs, wobei der Heizer des Kühlmittelkreislaufs zwischen den Wärmeübertragern des Kältemittelkreislaufs angeordnet ist. Einzelne Bereiche des Kältemittelkreislaufs werden bei bestimmten Betriebsbedingungen nicht durchströmt. Allerdings ist dieses System darauf angewiesen, dass eine leistungsfähige Wärmequelle zur Erwärmung des Motorkühlmittels zur Verfügung steht, die dies bei konventionellen, mit einem Benzin-, Diesel- oder Gasmotor angetriebenen Verbrennungsmotoren der Fall ist. Im Falle eines (überwiegend) batteriebetriebenen Fahrzeugs steht jedoch in den meisten Fällen keine für die Wärmepumpe ausreichende Wärmequelle zur Verfügung. Das gleiche gilt für Brennstoffzellenfahrzeuge, bei denen in den ersten Minuten ebenfalls keine Wärme für eine Wärmepumpe zur Verfügung steht.

Die US 2004/0050086 A1 beschreibt ein Klimaanlage gemäß Oberbegriff des Anspruchs 1.

Es ist Aufgabe der Erfindung, die eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß sind eine Klimaanlage gemäß Anspruch 1 und ein Verfahren gemäß Anspruch 4 für ein durch einen Motor angetriebenes Fahrzeug mit einem Kältemittelkreislauf vorgesehen.

Ein derartiger Aufbau ermöglicht die Nutzung unterschiedlicher Wärmequellen, insbesondere die Nutzung von Luft (Umgebungsluft), wenn der Motor steht, und Kühlmittel, wenn der Motor läuft und eine ausreichende Temperatur hat.

Es ist parallel zum der Wärmeaufnahme dienenden Kühlmittel-Kühler mindestens ein weiterer Wärmeübertrager schaltbar, welcher die Wärme weiterer Wärmequellen nutzbar macht. Bevorzugt handelt es sich hierbei um einen Wärmeübertrager, der im von dem Fahrzeuginnenraum kommenden Abluftstrom (Kabinenabluft) angeordnet ist oder um einen Wärmeübertrager, welcher im Bereich der Batterie oder einer wärmeerzeugenden Leistungselektronik angeordnet ist. Dies ermöglicht eine relativ einfache Nutzung von Wärmequellen, die ansonsten ihre Wärme an die Umgebung abgeben würden. Durch die Nutzung dieser Wärme kann Energie eingespart werden, wodurch die Wärmepumpenleistung gesteigert werden und zudem die Vereisung des Kühlmittelkühlers verringert werden kann.

Der Motor ist vom Kühlmittel vorzugsweise zumindest teilweise über einen Bypass umströmbar. Dies erfolgt insbesondere dann, wenn keine Abwärme des Verbrennungsmotors oder einer Brennstoffzelle vorhanden ist, und das Fahrzeug nur über einen Elektromotor angetrieben wird. Die Temperatur des Motors ist dann zu gering, um von demselben Wärme aufzunehmen, so dass im Falle eines Durchströmens desselben das Kühlmittel Wärme an den Motor abgeben würde.

Der Kühlmittel-Kühler ist vorzugsweise neben dem Kältemittel-Kühler angeordnet, insbesondere bevorzugt sind beide Kühler in einem Bauteil integriert, und es sind Mittel zur Unterbrechung des Luftstroms durch die beiden Kühler vorgesehen.

In einem Heizbetrieb ohne Nutzung der Abwärme des Motors wird vorzugsweise das Kühlmittel, welches Wärme im Wärmepumpen-Wärmeübertrager an das Kältemittel abgibt und nachfolgend den Kühlmittel-Kühler durchströmt, über welchen es Wärme aus der Umgebung aufnimmt, unter Umgehung des Motors wieder dem Wärmepumpen-Wärmeübertrager zugeführt. So kann sichergestellt werden, dass im Motor kein unerwünschter Wärmeverlust erfolgt, insbesondere wenn der Motor kalt ist.

Bei einem Heizbetrieb ohne laufenden Motor und ohne Nutzung der Abwärme des Motors wird das Kühlmittel über Bypässe am Motor und/oder am Heizkörper vorbeigeführt, so dass die gesamte über (andere) Wärmequellen aufgenommene Wärme im Kühlmittel verbleibt und an den Wärmepumpen-Wärmeübertrager abgegeben werden kann.

Bevorzugt wird bei einem Heizbetrieb der Heizkörper über einen Bypass übergangen, bis die Kühlmitteltemperatur am Heizkörpereintritt mindestens 5K höher als die Umgebungstemperatur ist. Dies stellt sicher, dass keine Auswirkungen auf den Wärmepumpenkreislauf dahingehend auftreten, dass der Saugdruck zu stark absinkt.

Bevorzugt werden bei einem Heizbetrieb ohne laufenden Verbrennungsmotor Elemente des Kühlmittelkreislaufs, die eine geringere thermische Masse haben - abgesehen vom Wärmepumpen-Wärmeübertrager - über Bypässe umgangen, so dass kein unnötiger Wärmeverlust auftritt.

Bei einem Heizbetrieb ohne Nutzung der Abwärme des Motors wird vorzugsweise das Kühlmittel zusätzlich in parallelen Zweigen regelbar mittels Ventilen durch einen, zwei oder mehrere unterschiedliche Wärmeübertrager geleitet, in denen Wärme aufgenommen werden kann. Dies können beispielsweise der Kühler, ein Kabinenabluft-Wärmeübertrager oder ein Batterie-Wärmeübertrager sein.

Im Falle eines Vereisens des Kühlers, in dem die Umgebungswärme nicht mehr genutzt werden kann, erfolgt bevorzugt ein Start des Verbrennungsmotors, dessen Abwärme durch die Wärmepumpe genutzt werden kann. Weiterhin erfolgt bevorzugt eine Durchströmung des Kühlers mit warmem Motorkühlmittel, um diesen abzutauen, sobald die Temperatur des Motorkühlmittels eine ausreichende Temperatur erreicht hat. Zusätzlich erfolgt bevorzugt eine Unterbrechung des Luftstroms durch den Kältemittel-Gaskühler und den benachbart angeordneten Kühlmittelkühler, um die zur Abtauung benötigte Wärme zu minimieren.

Insgesamt ergibt sich durch die verbesserte Wärmenutzung eine Verringerung der Anzahl der Ein- und Ausschaltvorgänge des Motors, wodurch sich die Lebensdauer erhöht.

Im Folgenden wird die Erfindung anhand zweier Ausführungsbeispiele unter Bezugnahme auf die Zeichnung näher erläutert. In der Zeichnung zeigen:
- Fig. 1: eine schematische Darstellung der Kühl- und Kältemittelkreisläufe einer Klimaanlage gemäß dem ersten Ausführungsbeispiel im Heizbetrieb ohne Nutzung der Abwärme des Verbrennungsmotors unter Nutzung der Wärme der Kabinenabluft,
- Fig. 2: die Kühl- und Kältemittelkreisläufe von Fig. 1 in einem Heizbetrieb mit Nutzung der Abwärme des Verbrennungsmotors und der Wärme der Kabinenabluft,
- Fig. 3: die Kühl- und Kältemittelkreisläufe von Fig. 1 im Kühlbetrieb, und
- Fig.4: eine schematische Darstellung der Kühl- und Kältemittelkreisläufe einer nicht erfindungsgemäßen Klimaanlage im Heizbetrieb unter Nutzung der Abwärme des Verbrennungsmotors.

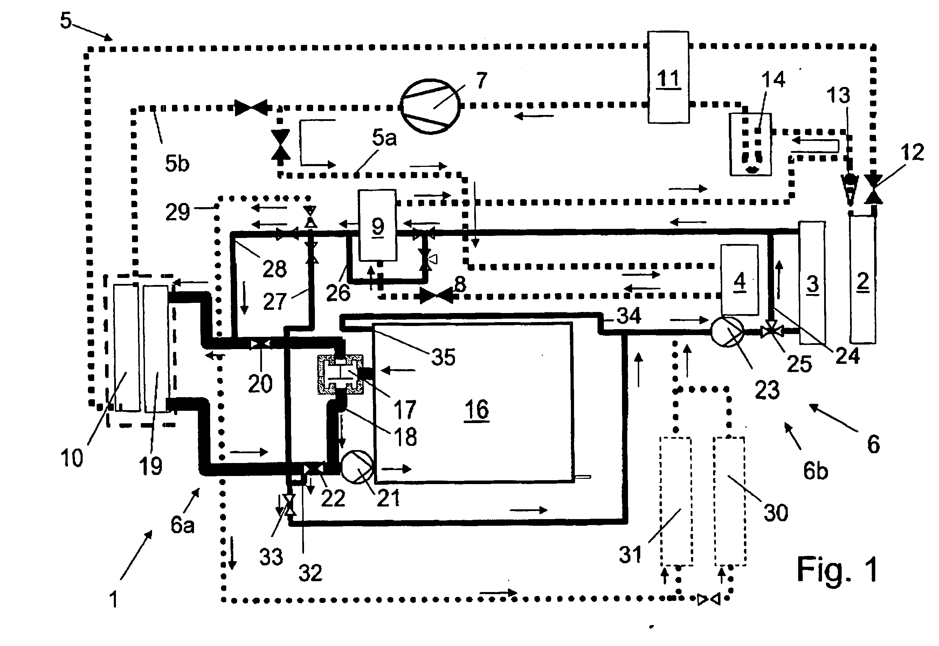

Eine Kraftfahreug-Klimaanlage 1 weist zur Temperierung des Fahrzeuginnenraums einen Verdampfer 2, einen Heizkörper 3 und einen Heizer 4 auf, welche von der dem Fahrzeuginnenraum zuzuführenden Luft durchströmbar sind. Hierbei wird zuerst der Verdampfer 2 und - je nach Stellung einer Mischklappe (nicht dargestellt) der Heizkörper 3 und der Heizer 4 von Luft durchströmt. Beim in Fig. 1 dargestellten Heizbetrieb werden sowohl der Heizkörper 3 als auch der Heizer 4 von zu erwärmender Luft durchströmt.

Der Verdampfer 2 und der Heizer 4 sind Teil eines Kältemittelkreislaufs 5, der in der Zeichnung durch eckig gepunktete Linien dargestellt ist. Der Heizkörper 3 ist Teil eines Kühlmittelkreislaufs 6, der in der Zeichnung durch durchgezogene und in einem Teilbereich der besseren Übersichtüchkeit halber mit rund gepunkteten Linien dargestellt ist.

Im Kältemittelkreislauf 5, der von einem Kältemittelverdichter 7 umgewälzt wird, sind zwei Zweige 5a und 5b vorgesehen, wobei die Kältemittelverteilung auf die beiden Zweige 5a und 5b mittels zweier Ventile erfolgt, die nach dem Kältemittelverdichter 7 angeordnet sind. Im ersten Kältemittel-Zweig 5a sind besagter Heizer 4, ein Expansionsorgan 8 und ein Wärmepumpen-Verdampfer 9 angeordnet. Im zweiten Kältemittel-Zweig 5b sind ein Kältemittel-Gaskühler 10, ein innerer Wärmetauscher 11, ein zweites Expansionsorgan 12, besagter Verdampfer 2 zur Kühlung der dem Fahrzeuginnenraum zuzuführenden Luft und ein Rückschlagventil 13 angeordnet. Nach der Zusammenführung der beiden Zweige 5a und 5b ist ein Sammler 14 und der auf dieser Seite in Gegenrichtung durchströmte innere Wärmetauscher 11 angeordnet.

Der Kühlmittelkreislauf 6 weist zwei wesentliche Zweige auf. Einer der Zweige ist der in der Zeichnung durch dicke Linien dargestellte, im Folgenden als Kühler-Zweig 6a bezeichnete Zweig, der zur direkten Kühlung des vom Motor 16 kommenden Kühlmittels dient, wobei ein Ventil 17 vorgesehen ist, über welches ein Teil des Kühlmittels über einen Bypass 18 vorbei am Kühler 19 geführt werden kann, während der Rest des Kühlmittels durch den Kühler 19 strömt, welcher für einen Wärmeaustausch von Umgebungsluft durchströmt wird. Die Umwälzung des Kühlmittels erfolgt durch eine Kühlmittelpumpe 21, wobei vor der Kühlmittelpumpe 21 ein weiteres Ventil 22 angeordnet ist. Zusammen mit einem Ventil 20, welches bevorzugt als Rückschlagventil ausgebildet ist, dient es dazu, den Anteil des Kältemittels einzustellen, der im Wärmepumpenbetrieb den Motor durchströmt. Dies wird an entsprechender Stelle näher beschrieben.

Der zweite Zweig des Kühlmittelkreislaufs 6, im Folgenden auch als Wärmepumpen-Zweig 6b bezeichnet, dient zur zusätzlichen Energie(rück)gewinnung, wobei er in Folge einer zweiten Kühlmittelpumpe 23 auch unabhängig vom Kühler-Zweig 6a betrieben werden kann. Ausgehend von der zweiten Kühlmittelpumpe 23 durchströmt das Kühlmittel den Heizkörper 3, welcher der Erwärmung der dem Fahrzeuginnenraum zuzuführenden Luft dient, oder umströmt denselben über einen Bypass 24, wobei die Regelung mittels eines an der Verzweigung angeordneten Ventils 25 erfolgt. Nach dem Durchströmen des Heizkörpers 3 bzw. des Bypasses 24 gelangt das Kühlmittel zum Wärmepumpen-Verdampfer 13 des Kältemittelkreislaufs 5, der geregelt mittels Ventilen auch über einen Bypass 26 umströmbar ist.

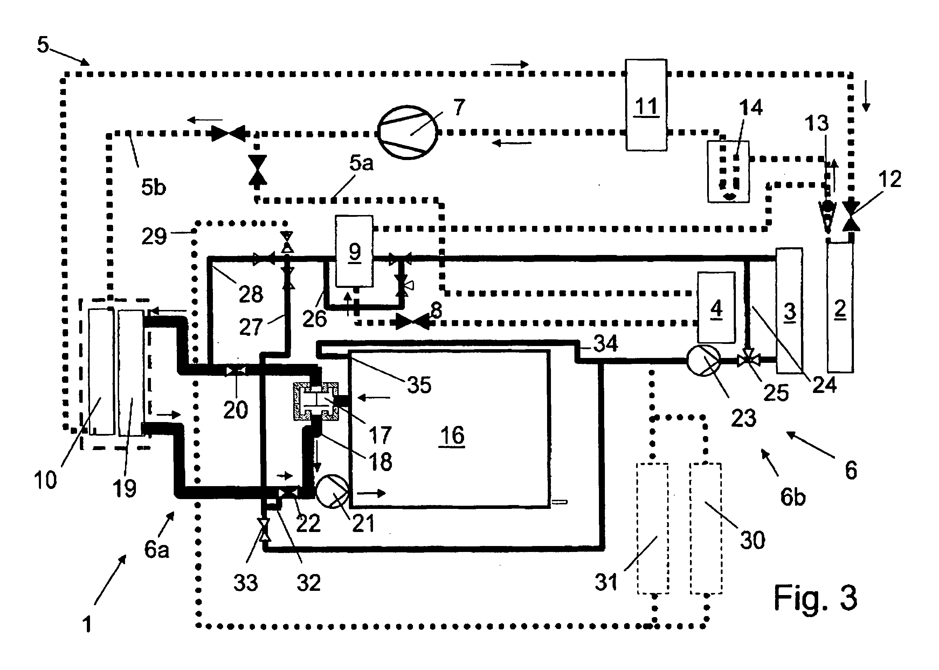

An einer weiteren Verzweigungsstelle verzweigt sich die Leitung in drei weiterführende Leitungen 27, 28, 29, wobei die rund gepunktet dargestellte Leitung 29, welche zu einem Batterie-Wärmeübertrager 30 und einem Kabinenabluft-Wärmeübertrager 31, die parallel geschaltet sind, wobei der Batterie-Wärmeübertrager 30 mittels eines zusätzlichen Ventils absperrbar ist, führt und anschließend vor der zweiten Kühlmittelpumpe 23 wieder in den Kreislauf einmündet, optional ist und gemäß dem zweiten Ausführungsbeispiel (siehe Fig. 3) ganz entfällt. Die Leitungen 27, 28, 29 sind gemäß der vorliegenden Darstellung mittels einzelner Ventile geregelt, jedoch kann auch ein gemeinsames Vierwegeventil an der Verzweigungsstelle vorgesehen sein, welches die Funktion der drei Ventile übernimmt.

Die Leitung 27 weist eine Verbindungsleitung 32 auf, welche kurz vor der ersten Kühlmittelpumpe 21 vor dem Ventil 22 in den Kühler-Zweig 6a des Kühlmittelkreislaufs 6 einmündet. Hinter der Abzweigung der Verbindungsleitung 32 ist in der Leitung 27 ein Ventil 33 zur Regelung des Kühlmittelstroms vorgesehen. Die Leitung 27 mündet - benachbart der optionalen Leitung 29 vor der zweiten Kühlmittelpumpe 23 in eine Leitung 34 des Kühlmittelkreislaufs 6 ein. Die Leitung 28 führt direkt zum Kühler-Zweig 6a und mündet in denselben nach dem Ventil 19 und vor dem Kühler 20 ein.

Ferner ist ein zweiter Auslass 35 für Kühlmittel aus dem Motor 16 vorgesehen, der mit der Leitung 34 verbunden ist, in welche die der Umgehung des Motors 16 dienende Leitung 27 einmündet, und die zur zweiten Kühlmittel-Pumpe 23 führt.

Im Folgenden wird die Funktion der Klimaanlage 1 gemäß dem ersten Ausführungsbeispiel, d.h. umfassend die rund gepunktet dargestellte Leitung 29 der Zeichnung, anhand verschiedener Betriebszustände näher erläutert.

Fig. 1 zeigt den Heizbetrieb der Klimaanlage 1 ohne Nutzung der Abwärme des Verbrennungsmotors 16, jedoch unter Nutzung der Wärme der Kabinenabluft, Batterie und sonstiger Leistungselektronik.

Hierbei wird der Kältemittelkreislauf 5 als Wärmepumpe verwendet, wobei der Kältemittelverdichter 7 das Kältemittel durch das offene Ventil des ersten Kältemittel-Zweigs zum Heizer 4, zum ersten Expansionsorgan 8, zum Wärmepumpen-Verdampfer 9, zum Sammler 14, zum inneren Wärmetauscher 11 und wieder zum Kältemittelverdichter 7 umwälzt. Das Ventil des zweiten Kältemittel-Zweigs 5b ist hierbei geschlossen, so dass kein Kältemittel durch den Kältemittel-Gaskühler 10 und den Verdampfer 2 strömt. Im Wärmepumpen-Verdampfer 9 nimmt das entspannte und daher kalte Kältemittel Wärme vom Kühlmittel auf, welches den Wärmepumpen-Verdampfer 9 vorliegend in Gegenrichtung durchströmt.

Das Kühlmittel wird bei dem in Fig. 1 dargestellten Heizbetrieb vom Motor 16 über den Bypass 18 und die erste Kühlmittel-Pumpe 21 wieder in den Motor 16 geleitet, d.h. es erfolgt keine Nutzung von Motorabwärme. Vorzugsweise wird die Kühlmittel-Pumpe 21 überhaupt nicht betrieben. Der Kühlmittelstrom wird über den Bypass 24 vorbei am Heizkörper 3 geführt und gelangt zum Wärmepumpen-Verdampfer 9, in welchem es Wärme an das Kältemittel abgibt. Das kalte Kühlmittel wird in Folge der Ventilstellungen der entsprechenden Ventile auf die Leitungen 28 und 29 verteilt. Die Leitung 27 wird in diesem Bereich nicht durchströmt. Das Kühlmittel, welches in die Leitung 28 gelangt, strömt durch den Kühler 19 und nimmt Wärme aus der Umgebung auf, bevor es über die Verbindungsleitung 32 in Folge des geschlossenen Ventils 22 der Leitung 27 und wieder der Leitung 34 zugeführt wird. Das Kühlmittel, welches in die Leitung 29 gelangt, durchströmt den Kabinenabluft-Wärmeübertrager 31 oder - sofern die Batterie ausreichend erwärmt und daher das vor dem Wärmeübertrager angeordnete Ventil geöffnet ist, alternativ den Batterie-Wärmeübertrager 30, wobei der Kühlmittelstrom vor den Wärmeübertragern 30 und 31 aufgeteilt wird. Anschließend wird das erwärmte Kühlmittel wieder dem durch die Leitung 34 strömenden Kühlmittel beigemischt. Dadurch, dass als zusätzliche Wärmequellen für den Kühlmittelkreislauf 6 die Kabinenabluft und die Batterie/Leistungselektronik zur Verfügung stehen, wird die Wärmeaufnahme aus der Umgebung minimiert, so dass sich zudem das BereifenNereisen des Kühlmittel-Kühlers 19 verlangsamt.

Diese Betriebsart wird insbesondere bei einem Frischluftbetrieb genutzt, bei welchem warme Abluft aus der Kabine zur Verfügung steht, aber in Folge eines längeren Motorstillstands, z.B. wegen eines Batteriebetriebs, keine oder nicht ausreichend Motorabwärme zur Verfügung steht.

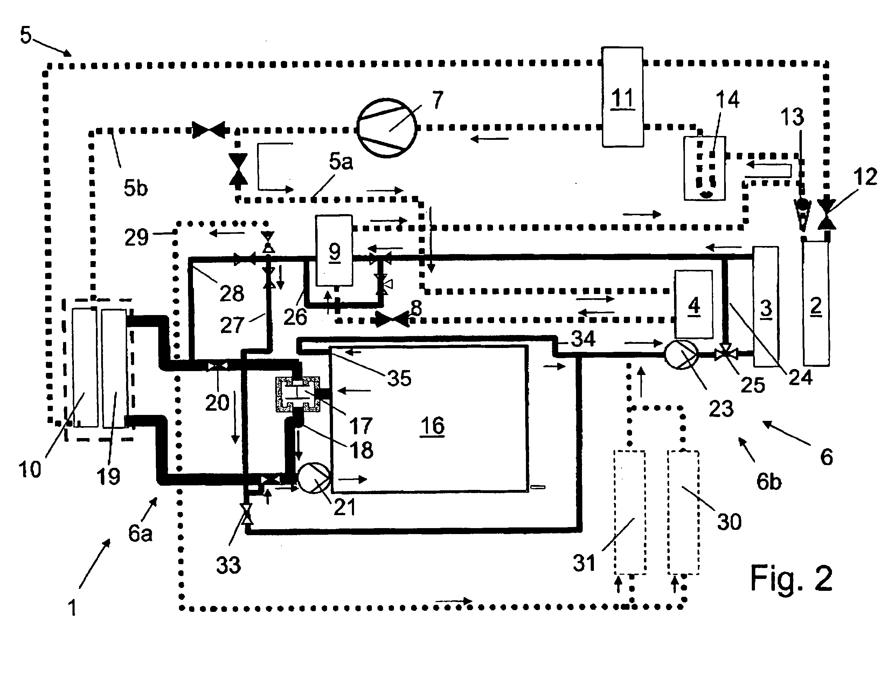

Fig. 2 zeigt einen Heizbetrieb unter Nutzung von Abwärme des Motors sowie - wie zuvor beschrieben - unter Nutzung der Wärme der Kabinenabluft, Batterie und sonstiger Leistungselektronik. Dieser Betrieb ist vorteilhaft, wenn der Verbrennungsmotor läuft und die Betriebsbedingungen, insbesondere Kühlmittel- und Öltemperatur, für diese Bedingungen vorteilhaft sind. Er kann ebenfalls angezeigt sein, wenn der Kühlmittelkühler vereist ist und nicht mehr ausreichend Umgebungswärme für die Wärmepumpe zur Verfügung stellen kann. Dann liefert der Verbrennungsmotor die Wärme für die Wärmepumpe.

Der Betrieb des Kältemittelkreislaufs 5 unterscheidet sich nicht von dem zuvor beschriebenen, so dass hierauf nicht näher eingegangen wird. Um das kalte Kältemittel im Wärmepumpen-Verdampfer 9 zu erwärmen, wird demselben dadurch warmes Kühlmittel zur Verfügung gestellt, dass Kühlmittel aus dem Motor 16 über den zweiten Auslass 35 des Motors 16 Kühlmittel über die zweite Kühlmittel-Pumpe 23 - je nach Temperatur des Kühlmittels über den Bypass 24 oder über den Heizkörper 3 - zum Wärmepumpen-Verdampfer 9 gelangt. Von dort aus wird das Kühlmittel auf die beiden Leitungen 27 und 29 verteilt, wobei es über die Leitung 27 und die Verbindungsleitung 32 dem Motor 16 wieder zugeführt wird, und über die Leitung 29 den Motor 16 umgeht, den Kabinenabluft-Wärmeübertrager 31 oder - sofern die Batterie ausreichend erwärmt und daher das vor dem Wärmeübertrager angeordnete Ventil geöffnet ist, in Gestalt einer Parallelschaltung den Batterie-Wärmeübertrager 30 durchströmt und anschließend wieder dem durch die Leitung 34 strömenden, vom Motor 16 kommenden Kühlmittel beigemischt wird.

Die Regelung des Kühlmittelstroms über den Heizkörper 3 und/oder den Bypass 24 erfolgt in Abhängigkeit der verfügbaren Wärme. Dabei wird der Heizkörper 3 über den Bypass 24 umgangen, wenn die Kühlmitteltemperatur am Heizkörpereintritt nicht mindestens 5K über der Umgebungstemperatur liegt und keine negative Auswirkung auf die Leistung des KältemittelKreislaufs 5 hat (d.h. dass der Saugdruck im Kältemittel-Kreislauf vorliegend nicht auf ein Niveau unter 15 bar absinkt).

Der Wärmepumpen-Wärmeübertrager 9 wird kühlmitteiseitig nur im reinen Heizkörper-Heizbetrieb umgangen. Dagegen werden beispielsweise der Heizkörper 3 oder der Motor 16 bei einem Heizbetrieb ohne laufenden Motor 16 - sofern hier eine niedrigere Temperatur als die des Kühlmittels herrscht - über Bypässe umgangen, so dass diese Bauteile nicht als Wärmesenken auf Grund ihrer Masse dienen.

Durch Takten der Ventile 22 und 33 und damit Schalten der zwischen den in den Figuren 1 und 2 beschriebenen Betriebszuständen ist es darüber hinaus möglich, die Nutzung der Motorwärme in gewissen Grenzen kontinuierlich einzustellen, was insbesondere bei einem Motorwarmlauf vorteilhaft ist.

Der Vollständigkeit halber ist in Fig. 3 noch ein Kühlbetrieb dargestellt, wobei zusätzlich die vom Motor 16 erzeugte Abwärme über den Kühler 19 an die Umgebung abgegeben wird. Der restliche Bereich des Kühlmittelkreislaufs 6 ist in diesem Betrieb nicht aktiv. Beim Kältemittelkreislauf 5 wird der zweite Zweig 5b von Kältemittel durchströmt, während der erste Zweig 5a durch das entsprechende Ventil abgesperrt ist. Somit gelangt das Kältemittel vom Kältemittelverdichter 7 zum Kältemittel-Gaskühler 10, in welchem es von Umgebungsluft gekühlt wird, zum inneren Wärmetauscher 11, in welchem eine weitere Abkühlung erfolgt, zum Expansionsorgan 12, in welchem der Druck verringert wird und dadurch das Kältemittel weiter abgekühlt wird, zum Verdampfer 2, in welchem es die dem Fahrzeuginnenraum zuzuführende Luft kühlt, über das Rückschlagventil 13 zum Sammler 14, zum zweiten Teil des inneren Wärmetauschers 11, in welchem es Wärme vom ersten Teil des inneren Wärmetauschers 11 aufnimmt, und wieder zum Kältemittelverdichter 7.

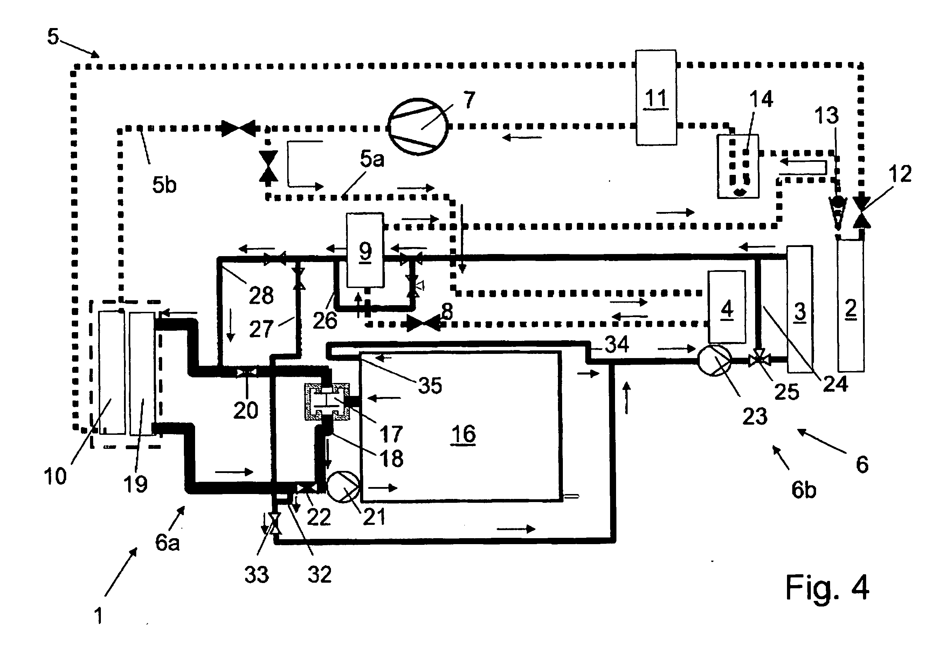

Fig. 4 zeigt einen Fig. 1 entsprechenden nicht erfindungsgemäßen Betrieb, bei dem jedoch die zusätzliche Wärmequelle der Kabinenabluft und der Batterie/Leistungselektronik nicht genutzt wird. Die Funktion in diesem Betrieb, wie auch bei anderen Betriebsarten entspricht der des ersten Ausführungsbeispiels, wobei jedoch die Leitung 29 und die Wärmeübertrager 30 und 31 entfallen und somit nicht zum Wärmeeintrag ins Kühlmittel nicht zur Verfügung stehen, so dass zur Vermeidung von Wiederholungen hierauf nicht nochmals näher eingegangen wird.

Obwohl vorstehend nicht näher beschrieben, können Kühler 19 und Kältemittel-Gaskühler 10 in ein einziges Bauteil integriert sein. Dabei kann beispielsweise einer der Kühler sich nur über einen Teil der Breite erstrecken und der andere Kühler kann im entsprechenden Bereich tiefer ausgebildet sein, so dass der Bauraum über die gesamte Breite vollständig ausgenützt ist.

Ferner ist das Vorsehen einer Unterbrechung der Luftdurchströmung von Kühler 19 und Kältemittel-Gaskühler 10, beispielsweise in Gestalt einer Jalousie, möglich, welche ein beschleunigtes Enteisen des Kühlmittelkühlers 19, insbesondere bei niedrigen Außentemperaturen, ermöglicht. Hierbei kann im Falle eines Vereisens des Kühlmittelkühlers 19 - um einen unterbrechungsfreien Heizbetrieb der Wärmepumpe zu ermöglichen - der Motor 16 gestartet werden. Nach Erreichen einer ausreichenden Kühlmitteltemperatur kann der Kühler 19 mit warmem Kühlmittel durchströmt und damit zügig abgetaut werden. Hierfür wird bevorzugt das Durchströmen der Luft unterbrochen.

Die kühlmittelseitige Anordnung von Heizkörper 3 und Wärmepumpen-Verdampfer 9 kann je nach Anforderung hinsichtlich des Bauraums und der Funktion von der hier dargestellten Anordnung abweichen. So ist eine Parallelschaltung von Heizkörper und Wärmepumpen-Verdampfer denkbar, oder auch eine Schaltung, bei welcher der Wärmepumpen-Verdampfer kühlmittelseitig vor dem Heizkörper angeordnet ist.

Weiterhin kann das Kältemittel-Ventil 22 auch in der Leitung 34 zwischen dem Auslass 35 und dem Einmünden der Leitung 27 angebracht sein. Je nach Ausgestaltung des Motorkühlkreislaufs können auch andere Anordnungen von Ventilen erforderlich sein, um eine der Erfindung gemäße Funktion zu gewährleisten.

Weiterhin kann es vorteilhaft sein, zusätzlich einen elektrischen Heizer zur Erwärmung des Kühlmittels einzusetzen. Dies kann erforderlich sein, wenn durch den Verbrennungsmotor im aktuellen Lastzustand nicht genügend Abwärme produziert wird, beispielsweise im Leerlauf oder bei längerer Bergabfahrt bei gleichzeitig voll beladener Batterie. Dann kann die gewünschte Heizleistung direkt bereitgestellt werden, und zusätzlich die Abwärme des Verbrennungsmotors durch die erhöhte Last erhöht werden.

## Patentansprüche

1. Klimaanlage für ein durch einen Motor (16) angetriebenes Fahrzeug mit einem Kältemittelkreislauf (5) mit mehreren Wärmeübertragern (2, 11) durch die ein Kältemittel für einen Wärmetausch mit der sie durchströmenden Luft leitbar ist, und einem Wärmepumpen-Wärmeübertrager (9), in welchem ein Wärmeaustausch mit einem Kühlmittelkreislauf (6) erfolgt, in welchem mindestens ein Kühlmittel-Kühler (19) angeordnet ist, wobei der Kühlmittel-Kühler (19) im Heizbetrieb als Wärmeübertrager zur Aufnahme von Wärme aus der Umgebung verwendbar ist, wobei der Kühlmittel-Kühler (19) in Reihe nach dem Wärmepumpen-Wärmeübertrager (9) im Kühlmittelkreislauf (6) geschaltet ist, **dadurch gekennzeichnet, dass** der Kältemittelkreislauf (5) einen ersten Zweig (5a) und einen zweiten Zweig (5b) aufweist, wobei die Kältemittelverteilung auf die beiden Zweige (5a, 5b) mittels zweier Ventile erfolgt und parallel zum der Wärmeaufnahme dienenden Kühlmittel-Kühler (19) mindestens ein weiterer Wärmeübertrager (30, 31) schaltbar ist, welcher Wärme aus anderen Wärmequellen aufnimmt.

2. Klimaanlage nach Anspruch 1, **dadurch gekennzeichnet, dass** der Motor (16) vom Kühlmittel zumindest teilweise über einen Bypass (27) umströmbar ist.

3. Klimaanlage nach einem der vorhergehenden Ansprüche, **dadurch gekennzeichnet, dass** der Kühlmittel-Kühler (19) neben dem Kältemittel-Kühler (10) angeordnet ist, insbesondere beide Kühler (10, 19) in einem Bauteil integriert sind, und/oder dass Mittel zur Unterbrechung des Luftstroms durch die beiden Kühler (10, 19) vorgesehen sind.

4. Verfahren zum Betreiben einer Klimaanlage (1) gemäß einem der Ansprüche 1 bis 3, gemäß dem in einem Heizbetrieb ohne Nutzung der Abwärme des Motors (16) das Kühlmittel, welches zuerst Wärme im Wärmepumpen-Wärmeübertrager (9) an das Kältemittel abgibt und nachfolgend den Kühlmittel-Kühler (19) durchströmt, in welchem es Wärme aus der Umgebung aufnimmt, unter Umgehung des Motors (16) wieder dem Wärmepumpen-Wärmeübertrager (9) zugeführt wird, **dadurch gekennzeichnet, dass** in einem Heizbetrieb ein erster Zweig (5a) von Kältemittel durchströmt wird und in einem Kühlbetrieb ein zweiter Zweig (5b) von Kältemittel durchströmt wird und in einem Heizbetrieb ohne Nutzung der Abwärme des Motors (16) das Kühlmittel in parallelen Zweigen regelbar mittels Ventilen durch mindestens zwei unterschiedliche Wärmeübertrager (30, 31, 19) geleitet wird, in denen Wärme aufgenommen werden kann.

5. Verfahren nach Anspruch 4, **dadurch gekennzeichnet, dass** bei einem Heizbetrieb ohne laufenden Motor (16) und ohne Nutzung der Abwärme des Motors (16) das Kühlmittel über Bypässe am Motor (16) und/oder am Heizkörper (3) vorbeigeführt wird.

6. Verfahren nach Anspruch 4 oder 5, **dadurch gekennzeichnet, dass** bei einem Heizbetrieb der Heizkörper (3) über einen Bypass (24) übergangen wird, bis die Kühlmitteltemperatur am Heizkörpereintritt mindestens 5K höher als die Umgebungstemperatur ist.

7. Verfahren nach einem der Ansprüche 4 bis 6, **dadurch gekennzeichnet, dass** bei einem Heizbetrieb ohne laufendem Motor (16) Elemente des Kühlmittelkreislaufs (6), die eine geringere Temperatur als das Kühlmittel im entsprechenden Bereich haben, über Bypässe umgangen werden.

8. Verfahren nach einem der Ansprüche 4 bis 7, **dadurch gekennzeichnet, dass** bei einem Vereisen des Kältemittel-Gaskühlers (10) eine Unterbrechung des Luftstroms durch den Kältemittel-Gaskühler (10) und den benachbart angeordneten Kühlmittel-Kühler (19) erfolgt, und/oder dass bei laufendem Motor (16) dessen Abwärme für die Wärmepumpe genutzt und/oder warmes Kühlmittel durch den Kühlmittel-Kühler (19) geleitet wird.

## Claims

1. An air conditioning system for a vehicle driven by an engine (16), comprising a refrigerant circuit (5) having multiple heat exchangers (2, 11), through which a refrigerant may be conducted for a heat exchange with the air flowing through the same, and a heat pump heat exchanger (9), in which a heat exchanger takes place with a coolant circuit (6), in which at least one coolant radiator (19) is disposed, wherein the coolant radiator (19) may be utilized during the heating operation as a heat exchanger for collecting heat from the environment, wherein the coolant radiator (19) is series-connected in the coolant circuit (6) after the heat pump heat exchanger (9), **characterized in that** the refrigerant circuit (5) comprises a first section (5a) and a second section (5b), wherein the refrigerant distribution on the two sections (5a, 5b) is carried out via two valves, and wherein at least one additional heat exchanger (30, 31) may be switched parallel to the coolant radiator (19) serving for heat absorption, absorbing heat from other heat sources.

2. The air conditioning system according to claim 1, **characterized in that** the engine (16) may be flowed bout by coolant at least partially via a bypass (27).

3. The air conditioning system according two one of the previous claims, **characterized in that** the coolant radiator (19) is disposed next to the refrigerant radiator (10), in particular that both radiator (10, 19) are integrated in one component, and/or that means are provided for disrupting the air flow through both radiator (10, 19).

4. A method for operating an air conditioning system (1) according to one of the claims 1 to 3, according to which in a heating operation without utilization of the waste heat of the engine (16) the coolant, first dispersing heat in the heat pump heat exchanger (9) to the refrigerant, and subsequently flows through the coolant radiator (19), in which it receives heat from the environment, is returned to the heat pump heat exchanger (9) by means of bypassing the engine (16), **characterized in that** in a heating operation a first section (5a) is flowed through by coolant, and in a cooling operation a second section (5b) is flowed through by a refrigerant, and in a heating operation without utilization of the waste heat of the engine (16) the coolant is conducted through at least two different heat exchangers (30, 31, 19) in a variable manner in parallel sections via valves, in which heat may be absorbed.

5. The method according to claim 4, **characterized in that** in a heating operation without running engine (16) and without utilisation of the waste heat of the engine (16) the coolant is directed past the engine (16 , and/or at the heating devise (3) via bypasses.

6. The method according to claims 4 or 5, **characterized in that** in a heating operation the heating devise (3) is skipped via a bypass (24), until the coolant temperature at the heating device inlet is at least 5K higher than the environment temperature.

7. The method according to one of the claims 4 to 6, **characterized in that** in a heating operation without running engine (16) elements of the coolant circuit (6) having a lower temperature than the coolant in the respective area, are skipped via bypassed.

8. The method according to one of the claims 4 to 7, **characterized in that** with a freeze over of the refrigerant gas radiator (10) a disruption of the air flow occurs by means of the refrigerant gas radiator (10) and the adjacently disposed coolant radiator (19), and/or that with running engine (16) the waste heat thereof is utilized for the heat pump, and or warm coolant is conducted through the coolant radiator (19).

## Revendications

1. Système de climatisation pour un véhicule entraîné par un moteur (16), comprenant un circuit de fluide frigorigène (5) comportant plusieurs échangeurs de chaleur (2, 11) à travers desquels peut être dirigé une fluide frigorigène pour un échange de chaleur avec l'air traversant lesdits échangeurs de chaleur, et un échangeur de chaleur de pompe à chaleur (9) dans lequel se produit un échange de chaleur, avec le circuit de liquide de refroidissement (6) dans lequel est disposé au moins un refroidisseur à liquide de refroidissement (19), où le refroidisseur à liquide de refroidissement (19), au cours du fonctionnement en mode chauffage, peut être utilisé comme un échangeur de chaleur servant à capter de la chaleur provenant du milieu environnant, ou le refroidisseur à liquide de refroidissement (19) est, dans le circuit de liquide de refroidissement (6), monté en série en aval de l'échangeur de chaleur (9) de la pompe à chaleur,
**caractérisé en ce que** le circuit de fluide frigorigène (5) présente une première branche de circuit (5a) et une deuxième branche de circuit (5b), ou la répartition du fluide frigorigène, sur les deux branches de circuits (5a, 5b), est réalisée au moyen de deux soupape, et au moins un autre échangeur de chaleur (30, 31) peut être couplé en parallèle au refroidisseur à liquide de refroidissement (19) servant à la récupération de chaleur, lequel échangeur de chaleur capte de la chaleur provenant d'autres sources de chaleur.

2. Système de climatisation selon la revendication 1, **caractérisé en ce que** le moteur (16) peut être contourné par le liquide de refroidissement, au moins partiellement via une dérivation (27).

3. Système de climatisation selon l'une ou l'autre des revendications précédentes, **caractérisé en ce que** le refroidisseur à liquide de refroidissement (19) est disposé à côté du refroidisseur à fluide frigorigène (10), en particulier les deux refroidisseurs (10, 19) sont intégrés dans un composant, et/ou **en ce qu'**il est prévu des moyens servant à l'interruption de la circulation du flux d'air à travers les deux refroidisseurs (10, 19).

4. Procédé de fonctionnement d'un système de climatisation (1) selon l'une quelconque des revendication 1 à 3, procédé conformément auquel, dans un fonctionnement en mode chauffage sans utilisation de la chaleur dissipée par le monteur (16), le liquide de refroidissement qui, dans l'échangeur de chaleur (9) de la pompe à chaleur, fournit d'abord de la chaleur au fluide frigorigène, et, ensuite, traversé le refroidisseur à liquide de refroidissement (19) dans lequel ledit liquide de refroidissement capte de la chaleur provenant du milieu environnant, est fourni à nouveau à l'échangeur de chaleur (9) de la pompe à chaleur, en contournant le moteur (16),
**caractérisé en ce que**, au cours d'un fonctionnement en mode chauffage, une première branche de circuit (5a) est traversée par du fluide frigorigène et, au cours d'un fonctionnement en mode refroidissement, une deuxième branche de circuit (5b) est traversée par du fluide frigorigène et, au cours d'un fonctionnement en mode chauffage, sans utilisation, de la chaleur dissipée par le moteur (16), le liquide de refroidissement est dirigé, dans des branches de circuit parallèles réglables au moyen de soupapes, à travers au moins deux échangeurs de chaleur (30, 31, 19) différents dans desquels de la chaleur peut être captée.

5. Procédé selon la revendication 4, **caractérisé en ce que**, dans le cas d'un fonctionnement en mode chauffages sans faire tourner le moteur (16) et sans utilisation de la chaleur dissipés par le moteur (16), le liquide de refroidissement est guidé via des dérivations, en passant devant le moteur (16) et/ou devant le radiateur (3).

6. Procédé selon la revendication 4 ou 5, **caractérisé en ce que**, dans le cas d'un fonctionnement en mode chauffages le radiateur (3) est évité, via une dérivation (24), jusqu'à ce la température du liquide de refroidissement, au niveau de l'entrée du radiateur, soit au moins de 5K supérieure à la température ambiante.

7. Procédé selon l'une quelconque des revendications 4 à 6, **caractérisé en ce que**, dans le cas d'un fonctionnement en mode chauffage, sans faire tourner le moteur (16), des éléments du circuit du liquide de refroidissement (6), qui ont une température plus basse que celle du liquide de refroidissement dans la zone correspondante, sont évités via des dérivations.

8. Procédé selon l'une quelconque des revendications 4 à 7, **caractérisé en ce que** dans le cas d'un givrage du refroidisseur à gaz/à fluide frigorigène (10), il se produit une interruption de la circulation du flux d'air traversant le refroidisseur à gaz/à fluide frigorigène (10) et le refroidisseur à liquide de refroidissement (19) disposé à côté, et/ou **en ce que**, lorsque le moteur (16) tourne, la chaleur qu'il dissipé est utilisée pour la pompe à chaleur et/ou du liquide de refroidissement chaud est dirigé à travers le refroidisseur à liquide de refroidissement (19).
